# EUROPEAN PATENT SPECIFICATION

(11) **EP 2 895 810 B1**
(45) Date of publication and mention of the grant of the patent: **03.11.2021**
(21) Application number: 13735389.2
(22) Date of filing: 08.07.2013
(51) Int. Cl.: F25J 1/00

(54) **METHOD AND APPARATUS FOR COOLING IN LIQUEFACTION PROCESS**
VERFAHREN UND VORRICHTUNG ZUR KÜHLUNG IN VERFLÜSSIGUNGSVERFAHREN
PROCÉDÉ ET APPAREIL DE REFROIDISSEMENT DANS UN PROCÉDÉ DE LIQUÉFACTION

(30) Priority: 06.07.2012 GB 201212056; 27.03.2013 GB 201305641
(43) Date of publication of application: 22.07.2015
(73) Proprietor: Highview Enterprises Limited, London EC1Y 0TH (GB)
(72) Inventor: MORGAN, Rob, Shoreham by Sea West Sussex BN43 6TH (GB); NELMES, Stuart, Berkshire SL4 2PU (GB); CASTELLUCCI, Nicola, Woking Surrey GU22 9AU (GB); HARRIS, Daniel, Feltham Middlesex TW14 9NF (GB)
(74) Representative: Carpmaels & Ransford LLP
(86) International application number: PCT/GB2013/051797
(87) International publication number: WO 2014/006426

(56) References cited:
- WO-A1-90/08295
- WO-A1-2007/021351
- DE-A1- 1 551 597
- DE-A1- 10 147 047
- DE-B- 1 036 282
- None

## Description

### Field of the Invention

The present invention relates to cryogenic energy storage systems, and particularly to methods for the efficient balancing of the liquefaction process with the integrated use of cold recycle from an external source such as a thermal energy store.

### Background of the Invention

Electricity transmission and distribution networks (or grids) must balance the generation of electricity with the demand from consumers. This is normally achieved by modulating the generation side (supply side) by turning power stations on and off, and running some at reduced load. As most existing thermal and nuclear power stations are most efficient when run continuously at full load, there is an efficiency penalty in balancing the supply side in this way. The expected introduction of significant intermittent renewable generation capacity, such as wind turbines and solar collectors, to the networks will further complicate the balancing of the grids, by creating uncertainty in the availability of parts of the generation fleet. A means of storing energy during periods of low demand for later use during periods of high demand, or during low output from intermittent generators, would be of major benefit in balancing the grid and providing security of supply.

Power storage devices have three phases of operation: charge, store and discharge. Power storage devices generate power (discharge) on a highly intermittent basis when there is a shortage of generating capacity on the transmission and distribution network. This can be signalled to the storage device operator by a high price for electricity in the local power market or by a request from the organisation responsible for the operating of the network for additional capacity. In some countries, such as the United Kingdom, the network operator enters into contracts for the supply of back-up reserves to the network with operators of power plants with rapid start capability. Such contracts can cover months or even years, but typically the time the power provider will be operating (generating power) is very short. In addition, a storage device can provide an additional service in providing additional loads at times of oversupply of power to the grid from intermittent renewable generators. Wind speeds are often high overnight when demand is low. The network operator must either arrange for additional demand on the network to utilise the excess supply, through low energy price signals or specific contracts with consumers, or constrain the supply of power from other stations or the wind farms. In some cases, especially in markets where wind generators are subsidised, the network operator will have to pay the wind farm operators to 'turn off' the wind farm. A storage device offers the network operator a useful additional load that can be used to balance the grid in times of excess supply.

For a storage device to be commercially viable the following factors are important: capital cost per MW (power capacity), MWh (energy capacity), round trip cycle efficiency and lifetime with respect to the number of charge and discharge cycles that can be expected from the initial investment. For widespread utility scale applications it is also important that the storage device is geographically unconstrained - it can be built anywhere, in particular next to a point of high demand or next to a source of intermittency or a bottleneck in the transmission and distribution network.

One such storage device technology is the storage of energy using cryogen such as liquid air or nitrogen (Cryogenic Energy Storage (CES)) which offers a number of advantages in the market place. Broadly speaking a CES system would, in the charge phase, utilise low cost or surplus electricity, at periods of low demand or excess supply from intermittent renewable generators, to liquefy a working fluid such as air or nitrogen. This is then stored as a cryogenic fluid in a storage tank, and subsequently released to drive a turbine, producing electricity during the discharge or power recovery phase, at periods of high demand or insufficient supply from intermittent renewable generators.

Cryogenic Energy Storage (CES) Systems have several advantages over other technologies in the market place, one of which is their founding on proven mature processes. Means to liquefy air, necessary in the charging phase, have existed for more than a century; early systems utilised a simple Linde cycle in which ambient air is compressed to a pressure above critical (≥ 38bar), and progressively cooled to a low temperature before experiencing an isenthalpic expansion through an expansion device such as a Joule-Thomson valve to produce liquid. By pressurising the air above the critical threshold, the air develops unique characteristics and the potential for producing large amounts of liquid during expansion. The liquid is drained off and the remaining fraction of cold gaseous air is used to cool the incoming warm process stream. The amount of liquid produced is governed by the required amount of cold vapour and inevitably results in a low specific yield.

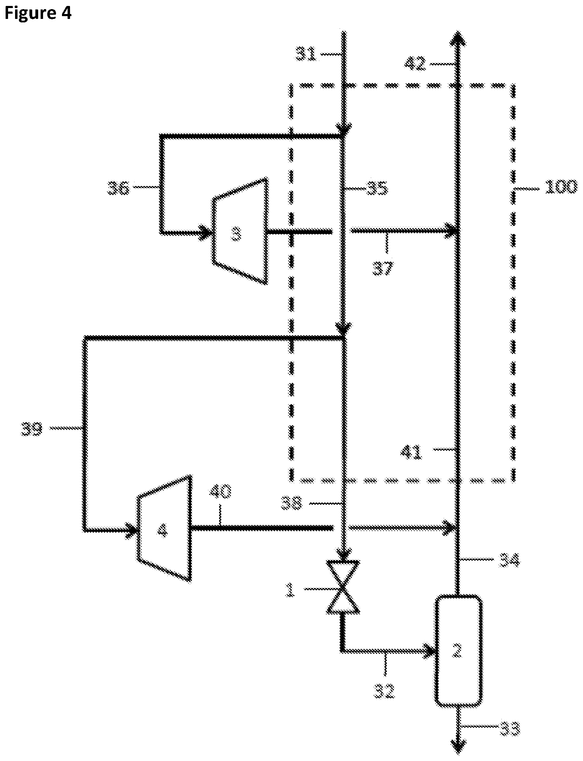

An evolution of this process is the Claude cycle (for which the current state of the art is shown in figure 4); the process is broadly the same as the Linde cycle however one or more streams 36, 39 are separated from the main process stream 31 where they are expanded adiabatically through turbines 3, 4, resulting in a lower temperature for a given expansion ratio than an isenthalpic process and hence efficient cooling. The air expanded through turbines 3, 4 then rejoins the returning stream 34 and aids the cooling of the high pressure stream 31 via heat exchanger 100. Similar to the Linde cycle the bulk of liquid is formed via expansion through an expansion device such as a Joule-Thomson valve 1. The main improvement with the Claude process is that power produced by the expansion turbines 3, 4 directly or indirectly reduces the overall power consumption, resulting in greater energy efficiency.

The most efficient modern air liquefaction processes typically use a two turbine Claude design, and at commercial scale can typically achieve an optimum specific work figure of around 0.4kWh/kg. Although highly efficient this would not enable a CES system to achieve a market entry Round Trip Efficiency figure of 50%, without significant reductions in specific work.

In order to achieve greater efficiencies the liquefaction process within a fully integrated CES system, such as the one disclosed in WO2007-096656A1, utilises cold energy captured in the evaporation of the cryogen during the power recovery phase. This is stored by means of an integrated thermal store, such as the one detailed in GB 1115336.8, and then used during the charging phase to provide additional cooling to the main process stream in the liquefaction process. The effective use of the cold recovery stream is a prerequisite to achieving an efficient cryogenic energy storage system.

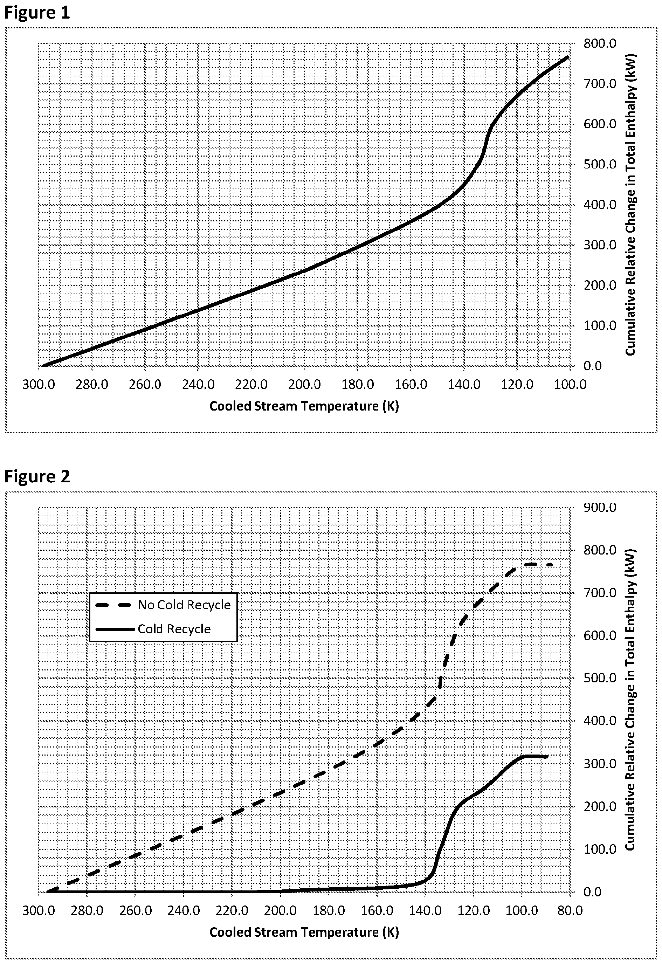

The necessary change in enthalpy that an arbitrary high pressure process stream must undergo to reach the required temperature to maximise liquid production when expanded through an expansion device such as a Joule-Thomson valve is shown in figure 1. A typical ideal cooling stream must similarly undergo an enthalpy change throughout the process as shown by the profile in figure 2, marked 'No Cold Recycle'. The second profile in figure 2 demonstrates the dramatic change in required cooling (i.e. relative change of enthalpy) when large quantities of cold recycle are introduced into the system, marked 'Cold Recycle'. Figure 2 shows quantities of cold recycle in the region of 250kJ/kg (defined as cooling enthalpy per kg of liquid product delivered), which is consistent with levels of cold recycle used in a fully integrated cryogenic energy system such as the one disclosed in WO2007-096656A1. As is evident from figure 2, the addition of the cold recycle completely satisfies the cooling requirements in the higher temperature end of the process.

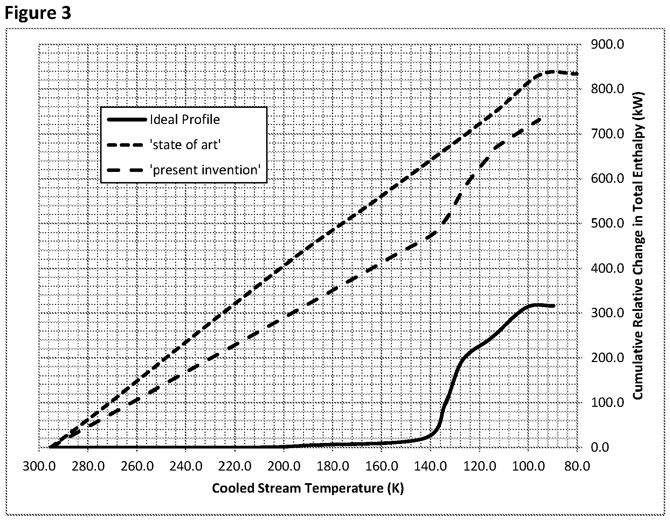

This presents a problem with current state of the art liquefaction processes which are designed to be used with more progressive thermal energy profiles, and are much more effectively handled by a single cooling stream running the extent of the heat exchanger. As can be seen from figure 3 the effective cooling stream produced by current state of the art processes (indicated by profile marked 'state of the art'), such as the Claude cycle shown in figure 4, is extremely linear in comparison to the required profile in a system using large quantities of cold recycle (indicated by profile marked 'Ideal Profile'), and a very poor match. To meet the acute cooling demand at the lower temperature end, a typical state of the art process must expand a similar quantity of air through the cold turbine as a system without cold recycle. This results in poor efficiencies and heat transfer requirements above the maximum design level of the device within the process heat exchangers.

The present inventors have identified that there is a need for a system that can provide focused non-progressive cooling to concentrated areas of the process, in particular at the lower temperature end of the process.

DE 10147 047 A1 describes a cryogenic liquefaction device according to the preamble of claim 1 and a method for balancing a liquefaction process with the use of cold recycle from an external energy source according to the preamble of claim 13.

WO 90/08295 A1 describes a method and apparatus for the liquefaction of a gas. The gas stream is divided into a product stream and a refrigeration stream which is expanded to low pressure in stages to provide return cooling flows against which the product stream is cooled down to approximately the liquefying temperature.DE 10 36 282 B describes a cooling system with a compressor and subsequent condenser for a refrigerant. The system further comprises at least two expansion turbines, a heat exchanger and primary and secondary channels routed in the vicinity of the turbines. The system can be used particularly for low temperatures.

DE 15 51 597 A1 describes a gas liquefaction process in which most of the refrigeration required to liquefy a compressed feed gas is met by dividing the feed stream into a major stream and a minor stream. The major stream is cooled in an exchanger and expanded without liquefaction in a turbine coupled to a compressor supplied with at least some of the feed gas. The minor stream is cooled and liquefied in exchangers traversed by the counterflowing turbine-expanded major stream. That stream is then sub-cooled in an exchanger, expanded to atmospheric pressure in reducing valves and fed to a storage tank.

### Summary of the Invention

A first aspect of the present invention addresses these needs by providing a cryogenic liquefaction device according to claim 1 and a method for balancing a liquefaction process according to claim 13.

Optional features of the invention are specified in the dependent claims.

In the context of the present invention, the phrase "a counter-flow direction" is used to mean that the second portion of the pressurised stream of gas flows through the heat exchanger in an opposite direction to the first portion of the pressurised stream of gas, for at least a part of its path through the heat exchanger. The first and second portions of the pressurised stream of gas may enter the heat exchanger at opposite ends, i.e. so that the temperature difference between the entry points is maximised. Alternatively, the first and or second portion of the pressurised stream of gas may enter the heat exchanger at a point between the ends of the heat exchanger, but flow through the heat exchanger in an opposite direction to the other of the first and second portion of the pressurised stream of gas, for at least a part of its path through the heat exchanger.

The cold recovery circuit comprises a thermal energy storage device, a means for circulating the heat transfer fluid (HTF), and an arrangement of conduits arranged to direct the HTF through the thermal energy storage device and into the heat exchanger. An exemplary cold recovery circuit is described in detail in GB 1115336.8. The HTF may comprise a gas or a liquid, at high or low pressure.

The configuration of the present invention is such that the second portion of the cooled process stream can be partially expanded through the first turbine to provide a high pressure cooling stream local to the entry point of the cold recovery stream of the cold recovery circuit. The stream can then be further expanded through the second turbine to provide significant additional cooling to the lower section of the process.

The present invention offers increased work output from the expansion turbines as a result of the reheating of the expanded stream, whilst also providing cooling between expansion turbines.

The pressurised stream of gas may consist of gaseous air. Alternatively, the pressurised stream of gas may consist of gaseous nitrogen. The pressurised stream of gas may be input into the cryogenic liquefaction device at a pressure greater than or equal to the critical pressure which, for gaseous air is 38bar and for gaseous nitrogen is 34bar.

After the pressurised stream of gas is split into two portions, the first portion of the pressurised stream of gas and the second portion of the pressurised stream of gas may be at the same pressure. Alternatively, the first portion of the pressurised stream of gas and the second portion of the pressurised stream of gas may be at different pressures. In particular, the first portion may be above the critical pressure, and the second portion may be below the critical pressure, or vice versa.

The cryogenic liquefaction device may further comprise a third expansion turbine, wherein the operating inlet pressure of the third expansion turbine is different to at least one of the first and second expansion turbines.

The arrangement of conduits may be such that the third expansion turbine is in parallel with at least one of the first and second turbines such that at least a portion of the second portion of the pressurised stream of process gas is directed through the third turbine.

The arrangement of conduits may be such that the third expansion turbine is in series with at least one of the first and second turbines such that at least a portion of the second portion of the pressurised stream of process gas is directed through the third turbine.

The cryogenic liquefaction device may further comprise a refrigerant circuit which is connected to the output of the second expansion turbine via the arrangement of conduits.

The cryogenic liquefaction device may further comprise a second arrangement of conduits that directs a second heat transfer fluid through a closed cycle refrigeration circuit and through a localised area of the heat exchanger. The second heat transfer fluid within the refrigerant circuit may comprise a gas or a liquid, at high or low pressure.

The cryogenic liquefaction device may further comprise a second phase separator and a second expansion device, wherein the arrangement of conduits is arranged such that at least a portion of the second portion of the pressurised stream of gas is directed through the second expansion device and the second phase separator after having passed through the first expansion turbine.

The or each expansion device may comprise a Joule-Thomson valve, another pressure reducing valve, an expansion turbine or another work extracting device.

The cryogenic liquefaction device may further comprise a first compressor, wherein the arrangement of conduits is arranged such that at least a portion of the second portion of the pressurised stream of gas is directed through the first compressor before passing through the first expansion turbine.

The cryogenic liquefaction device may further comprise a second compressor, wherein the arrangement of conduits is arranged such that the first portion of the pressurised stream of gas is directed through the second compressor before passing through the heat exchanger.

The cryogenic liquefaction device may further comprise a cooler, wherein the arrangement of conduits is arranged such that the first portion of the pressurised stream of gas is directed through the cooler after passing through the second compressor and before passing through the heat exchanger.

The arrangement of conduits may be arranged such that the pressurized stream of gas output from the feed stream compressor is directed to a heat storage device before passing through the heat exchanger.

The arrangement of conduits may be arranged such that the pressurized stream of gas output from the heat storage device is directed to a heat rejection device before passing through the heat exchanger.

### Brief Description of the Drawings

Embodiments of the present invention will now be described with reference to the figures in which:
figure 1 shows a profile of the relative change in total enthalpy which a process gas undergoes during the cooling process (Relative Change of Total Enthalpy vs Cooled Stream Temperature);
figure 2 shows profiles of the relative change in total enthalpy which the cooling streams must undergo during the cooling process for systems with and without the use of large quantities of cold recycle (Relative Change of Total Enthalpy vs Cooled Stream Temperature);
figure 3 shows profiles of the relative change in total enthalpy which the cooling streams must undergo during the cooling process for 'ideal', 'state of art' and 'present invention' systems with the use of large quantities of cold recycle (Relative Change of Total Enthalpy vs Cooled Stream Temperature);
figure 4 shows a typical state of the art air liquefaction plant arrangement using the Claude cycle;
figure 5 shows a schematic of a cryogenic energy storage system liquefaction process;
figures 6-10 show various aspects of example processe that are not according to the current invention;
figure 11 shows an embodiment of the first aspect of the present invention;
Figures 12-18 show several further example processes and variations thereof that are not according to the current invention.

### Detailed Description of the Invention

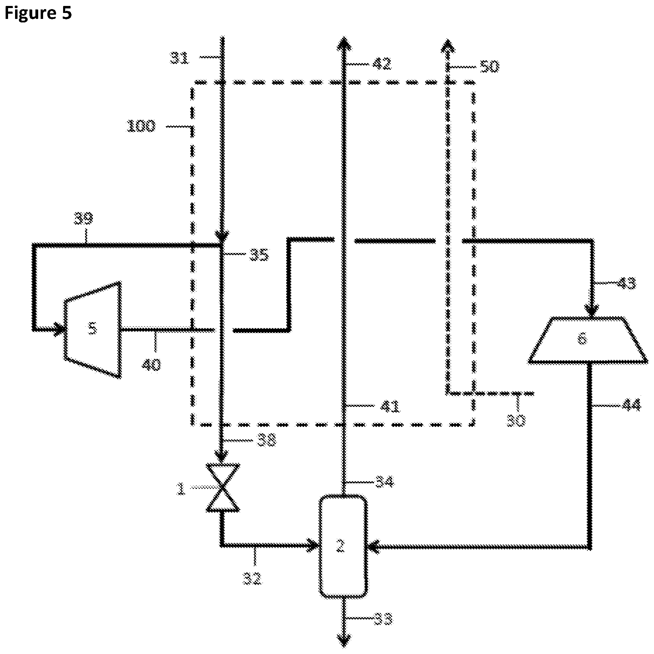

The first simplified example is shown in figure 5. The system in figure 5 is similar to that of the state of the art shown in figure 4 in that the main process stream 31 is cooled via cold expanded air from turbines and expanded through an expansion device such as a Joule-Thomson Valve 1 to produce liquid, however the warm turbine 3 of figure 4 is replaced by a second cold turbine 6 aligned in series with the first cold turbine 5.

In the first example shown in figure 5, the process gas (in the preferred embodiment air) is compressed to high pressure, of at least the critical pressure (which for air is 38bar, more preferably >45bar), and at ambient temperature (≈298K) enters the cryogenic liquefaction device at inlet 31, from where it is directed through a heat exchanger 100 and cooled progressively by cold low pressure process gas, before returning through the heat exchanger 100 via passage 41, 42. Also passing through the heat exchanger 100 is a cold recovery stream 30, 50 of a cold recovery circuit of the cryogenic liquefaction device. The cold recovery circuit comprises: a thermal energy storage device (not shown); a means for circulating a heat transfer fluid through the cold recovery circuit (not shown); and an arrangement of conduits arranged to direct the heat transfer fluid through the thermal energy storage device and the heat exchanger 100. An exemplary cold recovery circuit is described in detail in GB 1115336.8

A proportion of the high pressure process gas input into the heat exchanger at 31, and now at a temperature of between 150-170K (in the preferred case 165K), is separated from the main flow 31, via passage 39, and is partially expanded to between 5 and 20bar (more typically 10-14bar), using expansion turbine 5, before passing through passage 40, 43 of the heat exchanger 100, where cold thermal energy is transferred to the high pressure gas in stream 35. This feature of the present invention provides more effective cooling than the arrangement of figure 4 as a result of the higher pressure cooling stream 40, 43 around the entry point of the cold recovery stream 30, better matching the resultant cooling demand (as shown in figure 3) than conventional layouts, where the warm turbine 3 (of figure 4) provides cooling at higher temperatures which are not required where cold recycle is available.

The partially expanded gas stream in passage 40, 43 is heated to a temperature between 120-140K (in the preferred case 125K), as a result of the thermal transfer in passage 40, 43 through heat exchanger 100, and is further expanded through turbine 6, to between ambient and 6bar where it travels through passage 44 and enters the phase separator vessel 2. The gas fractions of streams 32 and 44 are combined to form output stream 34, which travels through passage 41, 42 through heat exchanger 100 which provides additional cooling to the high pressure process stream 35. An additional advantage of the present invention is that the typical composition of the cold process stream in stream 44 is a mixture of liquid and gaseous air. The liquid fraction from the final expansion is collected within the phase separator 2 and output via passage 33.

The numbered points in figure 5 indicate positions in the system at which typical absolute pressures, temperatures and mass flows are as follows:

| Point | Temperature (K) | Pressure (bar) | Mass Flow (kg/hr) |
|---|---|---|---|
| 31 | 298 | 45 | 16651 |
| 35 | 165.5 | 45 | 7160 |
| 38 | 101 | 45 | 7160 |
| 32 | 91.23 | 4 | 7160 |
| 33 | 91.23 | 4 | 6249 |
| 34 | 91.23 | 4 | 911 |
| 39 | 165.5 | 45 | 9491 |
| 40 | 113 | 11.23 | 9491 |
| 43 | 125.5 | 11.23 | 9491 |
| 44 | 95.91 | 4 | 9491 |
| 41 | 95.49 | 4 | 10402 |
| 42 | 295.3 | 4 | 10402 |
| 30 | 115 | 1.2 | 8280 |
| 50 | 295.3 | 1.2 | 8280 |

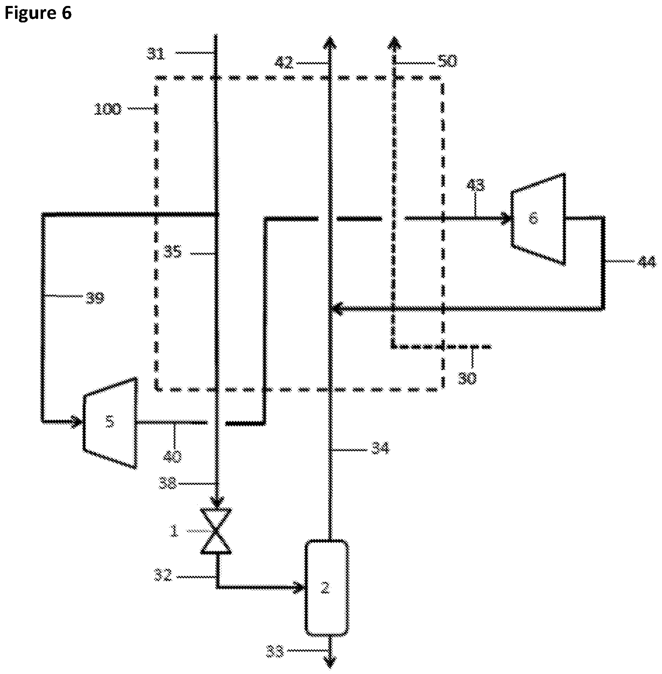

A second example process is shown in figure 6 (where like reference numerals refer to the same components as in figure 5), wherein the proportion of air separated from the main stream 31 via passage 39 is carried out later in the process and therefore at a lower temperature (between 130-170K). As a result the subsequent temperature of the cold gas after partial expansion in turbine 5, is sufficient to provide a high pressure cooling stream for the bottom end of the process stream 35 via passage 40, 43, after which it is expanded again through the second turbine 6 to provide additional focussed cooling in stream 34.

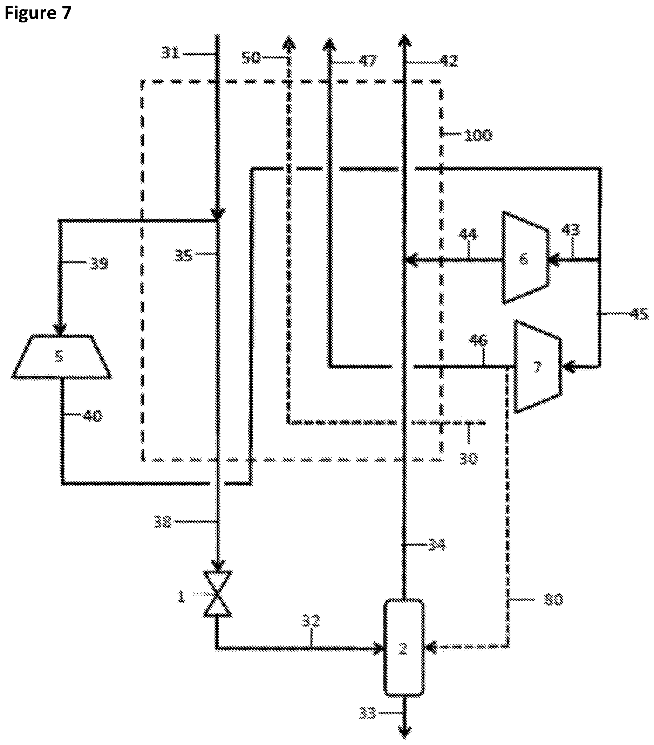

A third example process is shown in figure 7 (where like reference numerals refer to the same components as in figure 5) wherein a third expansion turbine 7 is provided in parallel with the second turbine 6 which remains in series with turbine 5. Similar to the second embodiment shown in figure 6, a portion 39 of the cold high pressure stream 31 is partially expanded by turbine 5 to provide a high pressure cooling stream 40 at the lower end of the heat exchanger only, before it is split again into two streams 43, 45 and expanded through the two further turbines 6 and 7 in parallel. The outlet from turbine 7 is introduced typically into the phase separator 2 via passage 80. In some embodiments where the cold recycle temperatures are low the outlet from turbine 7 may be introduced higher up the heat exchanger 100 via passage46.

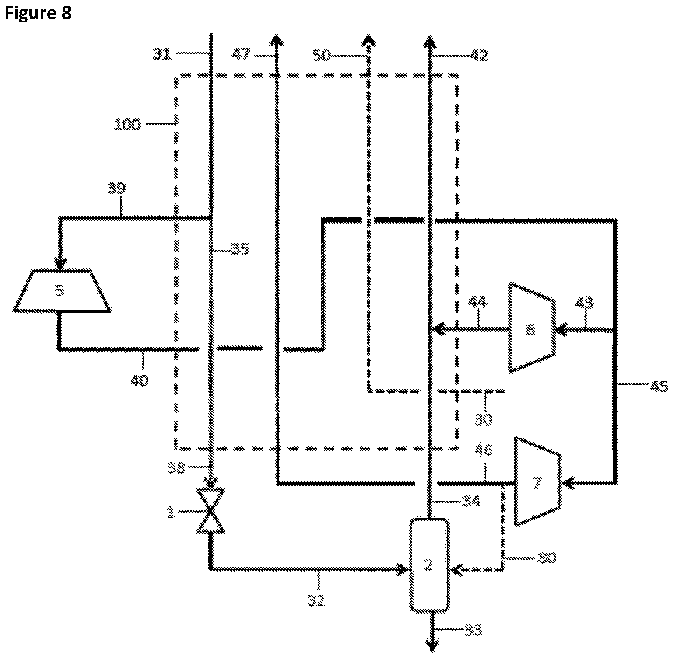

Figure 8 (where like reference numerals refer to the same components as in figure 7) details a fourth example process wherein, similar to the system shown in figure 7, a third expansion turbine 7 is added and placed in parallel to the second expansion turbine 6 which remains in series with the first expansion turbine 5. The expansion ratios of the second 6 and third 7 turbines are different from each other, the second expanding from around 8bar to 4.5bar, and the third expanding from around 8bar to near ambient. The inventors have realised that by layering multiple cooling streams in parallel as in figure 8, the cooling profile demand, identified in figure 3, can be more closely matched. In some embodiments, where the outlet pressure of turbine 7 is substantially equal to the separator pressure 2, the outlet of turbine 7 is introduced to the phase separator 2 via passage 80 where liquid formed in the outlet of turbine 7 is collected.

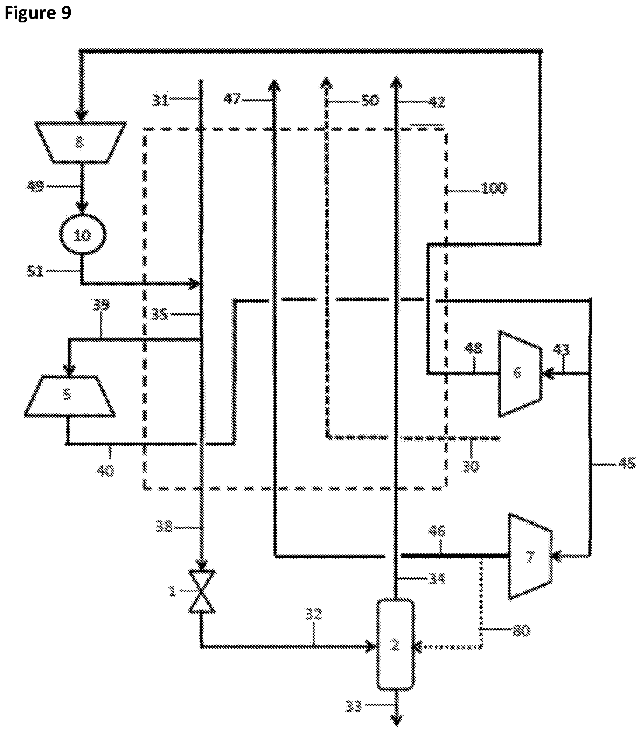

A further example process is shown in figure 9 (where like reference numerals refer to the same components as in figure 8). This example process is the same as that of figure 8 except that the exiting gases travelling through stream 48 from the second expansion turbine 6 are removed from the process heat exchanger 100 before reaching the top. The cold gases in stream 48 are further compressed, by compressor 8, and the resultant stream 49 is cooled by a closed cycle refrigeration circuit 10 before exiting the circuit 10 as stream 51 and mixing with the high pressure process stream 31. In certain embodiments there is the potential for a proportion of liquid to be formed in stream 46 from the cold gas on exiting the third turbine 7, whereby the stream would be directed via passage 80 to enter the phase separator 2, instead of being directed straight through the heat exchanger 100 via passageway 46, 47.

In a further example process (not shown but otherwise the same as figure 9), the outlet of turbine 7 may be expanded to near ambient so that this process stream can be used to drive a low pressure high grade cold store, such as that detailed in GB1115336.8.

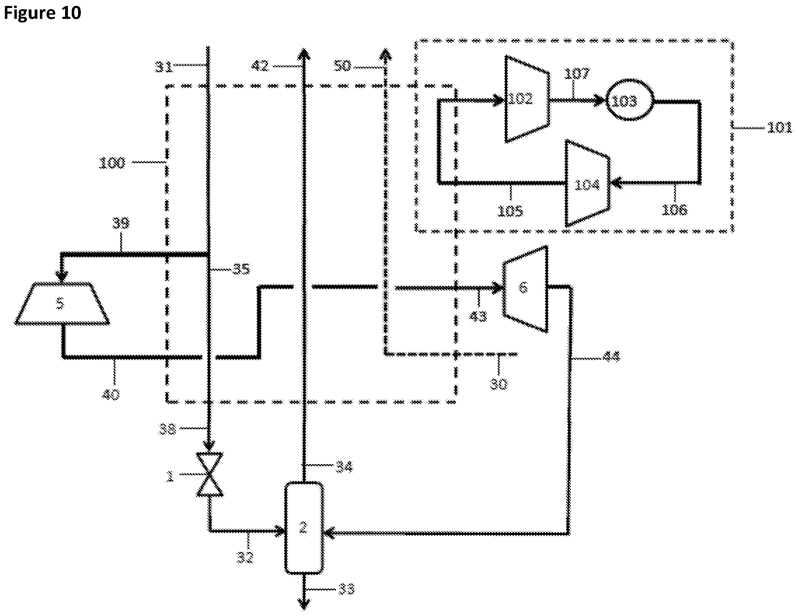

The example process shown in figure 10 (where like reference numerals refer to the same components as in figure 5) is the same as that of figure 5 except for the addition of a closed cycle refrigeration circuit 101 to provide a local potentially high pressure cooling stream 60 to better match the cooling demand. The closed cycle refrigeration circuit 101 includes compressor 102, cooler 103 and expansion turbine 104.

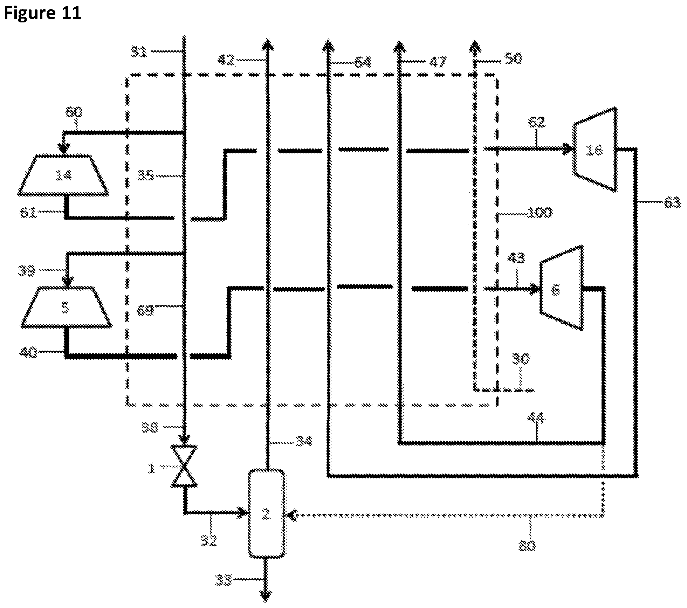

Figure 11 shows an embodiment of the present invention (where like reference numerals refer to the same components as in figure 5) wherein a warm turbine 14 and cold turbine 5 partially expand portions 60, 39 of the cold high pressure stream 31. Streams 60 and 39 are at different temperatures and are expanded to different pressures by turbines 14 and 5 to provide streams 61 and 40, respectively. Gas in streams 61 and 40 provides focussed cooling to the high pressure stream at points 35 and 69, before separately being expanded to between 0 and 6bar, using further turbines 16 and 6 to provide streams 63 and 44 which are directed through heat exchanger 100.

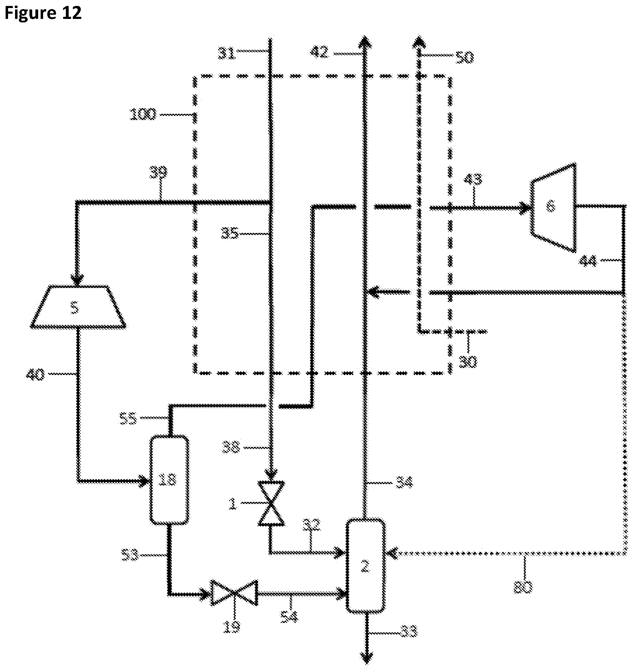

A variation to the second example process is shown in figure 12 (where like reference numerals refer to the same components as in figure 6) wherein the addition of a second phase separator 18 and pressure reducing valve 19 enable the removal of additional liquid produced in stream 40. In some embodiments the outlet pressure of turbine 6 is equal to the separator pressure 2 and the outlet of turbine 6 is introduced to the phase separator via passage 80 where liquid formed in the outlet to turbine 7 is collected.

A further component (not shown), which can be included in any of the previous embodiments is a closed loop refrigeration cycle (similar to cycle 101 shown in figure 10), that utilises a different working fluid to provide additional cooling at a specific section of the system where the cooling requirements are particularly high, in particular between 140 and 120K. The different working fluid may comprise a refrigerant such as methane.

A further arrangement, which can be applied to any of the previous embodiments where the high pressure stream is divided into two streams of different pressure, includes providing the first stream (that is cooled and then transferred to the expansion device) at a pressure above the critical pressure to maximise liquid production. The second high pressure stream is at a different pressure (typically above the first stream pressure) and is cooled and transferred to the two or more expansion turbines to provide additional cooling to the first stream as described in the previous embodiments.

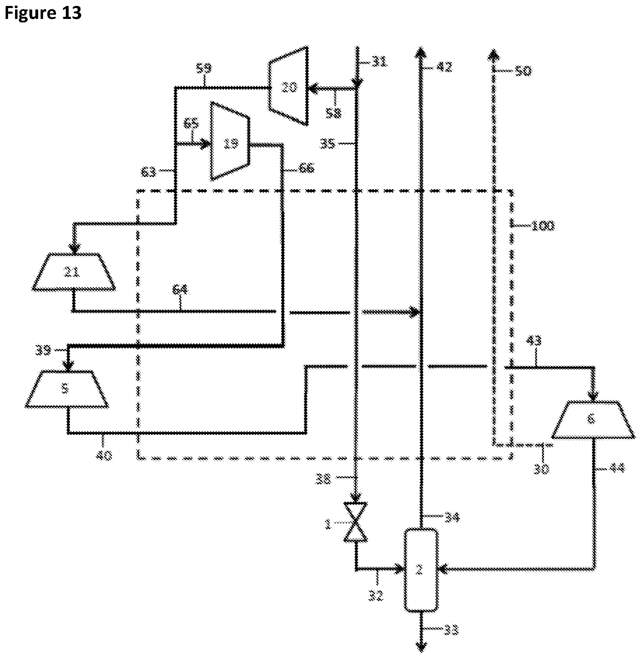

In a further example process as shown in figure 13 (where like reference numerals refer to the same components as in figure 5) the second stream 58 is compressed by compressor 20 to stream 59 and is then divided into a further two or more streams 63, 65. Stream 65 is compressed by compressor 19 and then directed, via a first stream (66), through two turbines 5, 6 in series. Stream 63 is expanded through a third turbine 21. The outlet streams 40, 44, 64 of the first, second and third turbines 5, 6, 21 provide additional cooling for the first process stream 35 prior to expansion in an expansion device such as a Joule-Thomson valve 1.

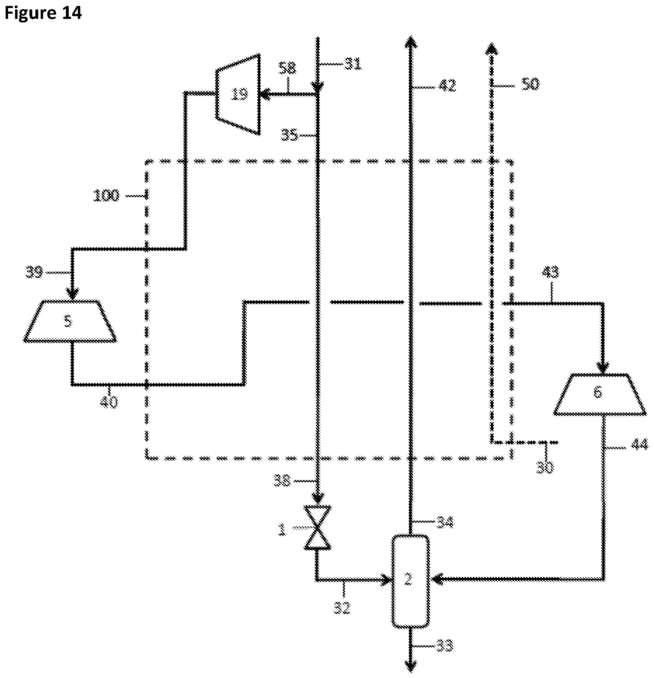

In a further example process as shown in figure 14 (where like reference numerals refer to the same components as in figure 5) applied to the first embodiment, the cooled gas stream 31 is fed directly from a compressor commonly referred to as a Recycle Air Compressor (RAC) and a stream 58 is split from the cooled gas stream 31 and subsequently boosted to a higher pressure by compressor 19 before being directed through expansion turbines 5 and 6 and heat exchanger 100. This additional booster component can be incorporated into any of the previous embodiments.

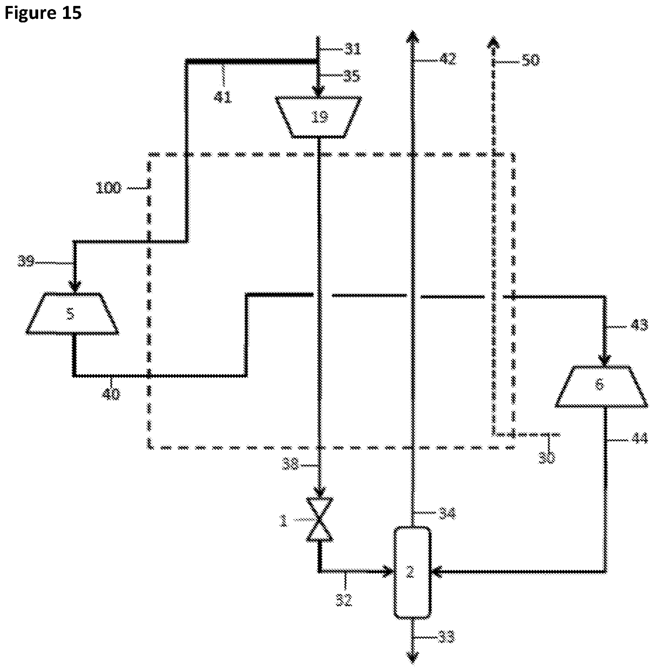

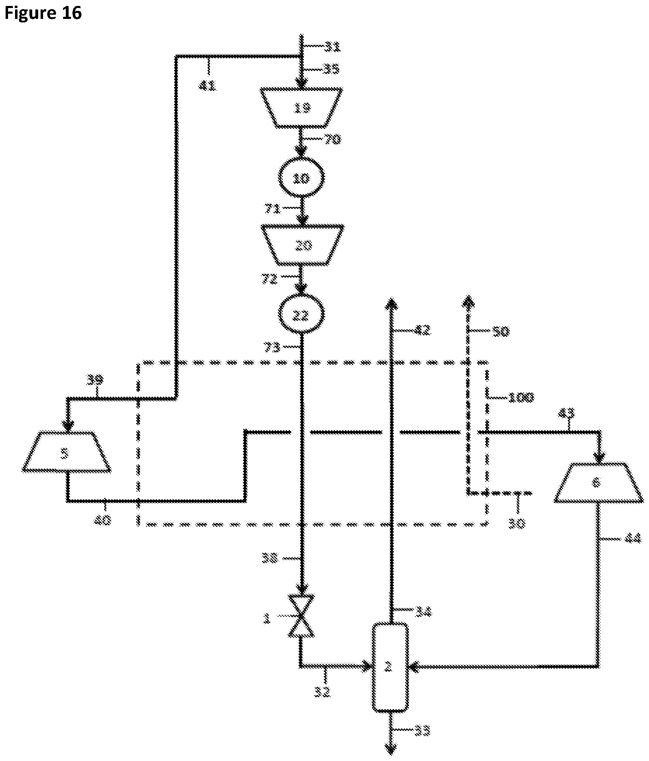

Figure 15 (where like reference numerals refer to the same components as in figure 14) shows a variation of the example process of figure 16 whereby stream 31 is fed directly from the RAC. Stream 31 is split into two streams 41 and 35; stream 41 is directed through heat exchanger 100, where it is cooled before being directed through expansion turbines 5 and 6 and again heat exchanger 100, while stream 35 is boosted to a higher pressure by booster 19 before being directed through heat exchanger 100 and an expansion device such as a Joule-Thomson valve 1.

Figure 16 (where like reference numerals refer to the same components as in figure 15), shows a variation where stream 31 is again fed directly from the RAC and compressed to a pressure lower than the critical pressure (<38bar). Stream 41 splits from the main cooled stream 31 prior to the remainder of the main cooled stream 35 being boosted and subsequently cooled by boosters 19 and 20, and coolers 10 and 22. The sub critical pressure stream 41 is cooled via heat exchanger 100 before being partially expanded, to between 5 and 20bar, but more typically 10-14bar, through expansion turbine 5 before passing through passage 40, 43, of the heat exchanger 100, where cold thermal energy is transferred to the high pressure gas in stream in passage 73, 38, and being further expanded by expansion turbine 6. The additional components arranged in stream 35 can also be incorporated in any of the previous embodiments.

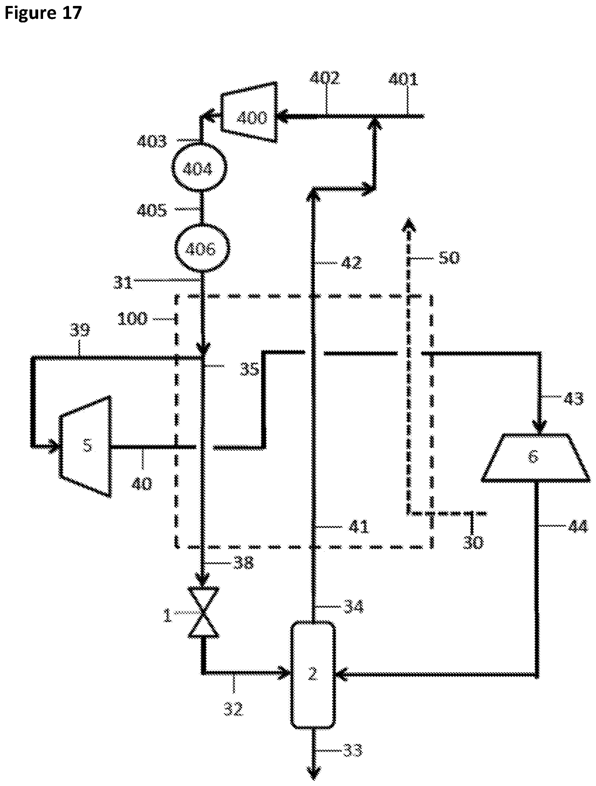

In the final example process as shown in figure 17 (where like reference numerals refer to the same components as in figure 15) shows a variation where output stream of the first phase separator 2 becomes low pressure return vapour 42, having passed through the heat exchanger 100, and merges with a feed stream 401 to form stream 402. The pressure of stream 402 can be between 3barA and 15barA, more typically 8barA. Stream 402 is directed to a single stage compressor 400, which boosts the stream 402 to a higher pressure. The output stream 403 of the single stage compressor 400 therefore has a higher pressure than stream 402. The higher pressure is at least the critical pressure (which for air is 38bar, more preferably >45bar). The temperature of stream 403 can be between 100degC and 400degC, more typically 270degC. Stream 403 is directed to a heat storage device 404 which removes at least some of the heat energy in the stream 403. The temperature of the output stream 405 of the heat storage device 404 can be between 20degC and 100degC, more typically 60degC. If the temperature of stream 405 is above ambient temperature the heat rejection device 406 may be used to cool the temperature of the stream. When this liquefaction cycle is used as part of a cryogenic energy storage plant it is highly preferable that the heat of compression captured by the heat storage device 404 is used in the power recovery cycle to boost the temperature of the working fluid at the inlet of the expansion turbines.

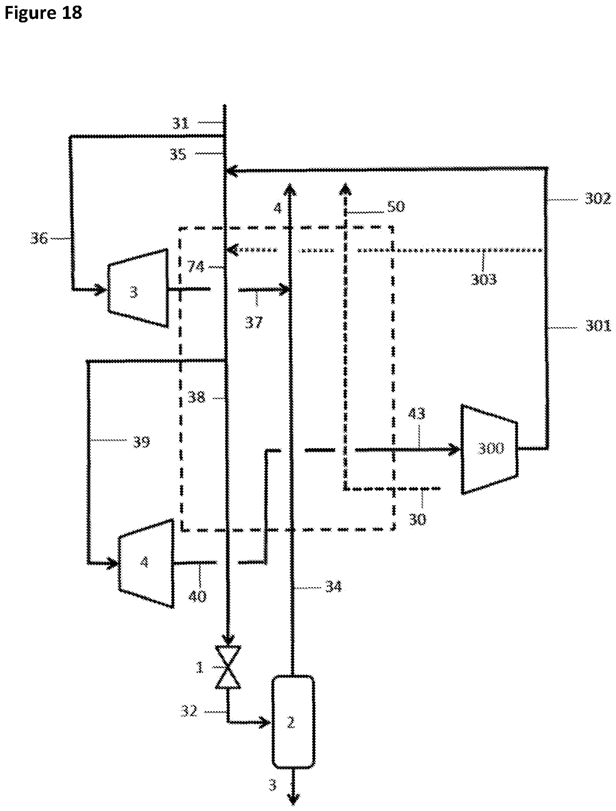

Figure 18 (where like reference numerals refer to the same components as in figure 4) shows an embodiment not according to the invention which is a further development of the air liquefaction plant arrangement of figure 4. Here, the cold vapour stream 40, which is output from the expansion turbine 4, is directed to the heat exchanger 100 rather than merging with returning stream 34 to form stream 41 as shown in Figure 4. The cold vapour stream 40 thus gains heat as it passes through the heat exchanger 100 and exits the heat exchanger as stream 43. The temperature of stream 43 can be between OdegC and - 180degC, more typically -117degC. Stream 43 is directed to a compressor 300, which boosts the stream 43 to a higher pressure. The compressor 300 can be a multistage compressor or a single stage compressor. The output stream 301 of the compressor 300 is directed back to heat exchanger 100 in one of two arrangements. If the temperature of stream 301 is near ambient temperature then it can be directed to merge with stream 35 outside the heat exchanger 100. This is shown by stream 302. Alternatively, if the temperature of stream 301 is below ambient temperature then it can be directed to merge with the stream 35 insider the heat exchanger to form stream 74. This is shown by stream 303.

It will of course be understood that the present invention has been described by way of example, and that modifications of detail can be made within the scope of the invention as defined by the following claims.

## Claims

1. A cryogenic liquefaction device comprising:
a heat exchanger (100);
a first phase separator (2);
a first expansion device (1);
a first expansion turbine (5);
a second expansion turbine (6);
a first arrangement of conduits, wherein:
the operating inlet pressures of the first and second expansion turbines are different from one another; and
the first arrangement of conduits is arranged such that:
a first portion of a pressurised stream of gas is directed through the heat exchanger, the first expansion device and the first phase separator;
a second portion of the pressurised stream of gas is directed through the first expansion turbine, then through the heat exchanger in a counter-flow direction to the first portion of the pressurised stream of gas, and then through the second expansion turbine;;
a cold recovery circuit (30) including a cold recovery stream of a first heat transfer fluid that is directed through the heat exchanger and enters the heat exchanger at an entry point, wherein the cold recovery circuit comprises:
a thermal energy storage device;
a means for circulating the first heat transfer fluid; and
a second arrangement of conduits arranged to direct the first heat transfer fluid through the thermal energy storage device and the heat exchanger;
a feed stream compressor adapted to output the pressurised stream of gas,
wherein the first arrangement of conduits is arranged such that:
a) a feed stream is directed to the input of the feed stream compressor; and
b) the gaseous output stream from the first phase separator joins the feed stream after passing through the heat exchanger, **characterised in that** the cryogenic liquefaction device further comprises: a fourth expansion turbine (14) and a fifth expansion turbine (16), and **in that** the
first arrangement of conduits is further arranged such that a third portion of the pressurised stream of gas is directed through the fourth expansion turbine, and
then through the heat exchanger in a counter-flow direction to the first portion of the pressurised stream of gas, and then through the fifth expansion turbine.

2. The cryogenic liquefaction device of any preceding claim, wherein the first portion of the pressurised stream of gas and the second portion of the pressurised stream of gas are either at different pressures or the same pressure upstream of the first expansion device and the first expansion turbine, respectively.

3. The cryogenic liquefaction device of any preceding claim, and further comprising a third expansion turbine (7), wherein:
the operating inlet pressure of the third expansion turbine is different to at least one of the first and second expansion turbines.

4. The cryogenic liquefaction device of claim 3, wherein the first arrangement of conduits is such that the third expansion turbine is either in parallel or series with at least one of the first and second turbines such that at least a portion of the second portion of the pressurised stream of process gas is directed through the third turbine.

5. The cryogenic liquefaction device of any preceding claim, and further comprising a refrigerant circuit which is connected to the output of the second expansion turbine via the first arrangement of conduits.

6. The cryogenic liquefaction device of any preceding claim and further comprising a third arrangement of conduits that directs a second heat transfer fluid through a closed cycle refrigeration circuit (101) and through a localised area of the heat exchanger.

7. The cryogenic liquefaction device of any preceding claim, and further comprising a second phase separator (18) and a second expansion device (2), wherein the arrangement of conduits is arranged such that at least a portion of the second portion of the pressurised stream of gas is directed through the second expansion device and the second phase separator after having passed through the first expansion turbine.

8. The cryogenic liquefaction device of any preceding claim, and further comprising a first compressor (20), wherein the first arrangement of conduits is arranged such that at least a portion of the second portion of the pressurised stream of gas is directed through the first compressor before passing through the first expansion turbine.

9. The cryogenic liquefaction device of any preceding claim, and further comprising a second compressor (19), wherein the first arrangement of conduits is arranged such that the first portion of the pressurised stream of gas is directed through the second compressor before passing through the heat exchanger.

10. The cryogenic liquefaction device of claim 9, and further comprising a cooler (10), wherein the first arrangement of conduits is arranged such that the first portion of the pressurised stream of gas is directed through the cooler after passing through the second compressor and before passing through the heat exchanger.

11. The cryogenic liquefaction device of any preceding claim, wherein the output from the second or, when dependent on claim 4 or claim 5, third, and fifth expansion turbine is directed into the first phase separator.

12. The cryogenic liquefaction device of claim 1, wherein the first arrangement of conduits is arranged such that the pressurised stream of gas output from the feed stream compressor is directed to a heat storage device (404) before passing through the heat exchanger, and preferably such that the pressurised stream of gas output from the heat storage device is directed to a heat rejection device (406) before passing through the heat exchanger.

13. A method for balancing a liquefaction process with the use of cold recycle from an external thermal energy source, the method comprising:
directing a feed stream to the input of a feed stream compressor;
outputting a pressurised stream of gas from the feed stream compressor;
directing a first portion of the pressurised stream of gas through a heat exchanger, a first expansion device, and a first phase separator;
directing the gaseous output stream from the first phase separator to join the feed stream after passing through the heat exchanger; and
directing a cold recovery stream of heat transfer fluid through a cold recovery circuit, wherein:
the heat transfer fluid is directed through a thermal energy storage device and through the heat exchanger at an entry point;
directing a second portion of a pressurised stream of gas through a first expansion turbine, then through the heat exchanger in a counter-flow direction to the first portion of the pressurised stream of gas and then through a second expansion turbine;
wherein:
the operating inlet pressures of the first and second expansion turbines are different from one another,
**characterised in that** the method further comprises:
directing a third portion of the pressurised stream of gas through a fourth expansion turbine, and then through the heat exchanger in a counter-flow direction to the first portion of the pressurised stream of gas, and then through a fifth expansion turbine.

## Patentansprüche

1. Kryogene Verflüssigungsvorrichtung, umfassend:
einen Wärmetauscher (100);
einen ersten Phasentrenner (2);
eine erste Expansionsvorrichtung (1);
eine erste Expansionsturbine (5);
eine zweite Expansionsturbine (6);
eine erste Anordnung von Leitungen, wobei:
die Arbeitseinlassdrucke der ersten und der zweiten Expansionsturbine voneinander verschieden sind; und
die erste Anordnung von Leitungen so angeordnet ist, dass:
ein erster Teil eines druckbeaufschlagten Gasstroms durch den Wärmetauscher, die erste Expansionsvorrichtung und den ersten Phasentrenner geleitet wird;
ein zweiter Teil des druckbeaufschlagten Gasstroms durch die erste Expansionsturbine, dann in einer Gegenstromrichtung zu dem ersten druckbeaufschlagten Gasstrom durch den Wärmetauscher und dann durch die zweite Expansionsturbine geleitet wird;
einen Kälterückgewinnungskreis (30), der einen Kälterückgewinnungsstrom eines ersten Wärmeträgerfluids, das durch den Wärmetauscher geleitet wird und an einem Eintrittspunkt in den Wärmetauscher eintritt, aufweist, wobei der Kälterückgewinnungskreis umfasst:
eine Wärmeenergiespeichervorrichtung;
eine Einrichtung zum Zirkulieren des ersten Wärmeträgerfluids; und
eine zweite Anordnung von Leitungen, die dafür angeordnet ist, das erste Wärmeträgerfluid durch die Wärmeenergiespeichervorrichtung und den Wärmetauscher zu leiten;
einen Zustromkompressor, der dafür ausgelegt ist, den druckbeaufschlagten Gasstrom auszugeben,
wobei die erste Anordnung von Leitungen so angeordnet ist, dass:
a) ein Zustrom zu dem Eingang des Zustromkompressors geleitet wird; und
b) der gasförmige Abstrom aus dem ersten Phasentrenner mit dem Zustrom nach dem Durchlaufen des Wärmetausches zusammengeführt wird,
**dadurch gekennzeichnet, dass** die kryogene Verflüssigungsvorrichtung ferner umfasst: eine vierte Expansionsturbine (14) und eine fünfte Expansionsturbine (16),
und dass die erste Anordnung von Leitungen ferner so angeordnet ist, dass ein dritter Teil des druckbeaufschlagten Gasstroms durch die vierte Expansionsturbine und dann in einer Gegenstromrichtung zu dem ersten Teil des druckbeaufschlagten Gasstroms durch den Wärmetauscher und dann durch die fünfte Expansionsturbine geleitet wird.

2. Kryogene Verflüssigungsvorrichtung gemäß einem der vorstehenden Ansprüche, wobei der erste Teil des druckbeaufschlagten Gasstroms und der zweite Teil des druckbeaufschlagten Gasstroms stromaufwärts bezogen auf die erste Expansionsvorrichtung bzw. die erste Expansionsturbine entweder verschiedene Drucke oder den gleichen Druck aufweisen.

3. Kryogene Verflüssigungsvorrichtung gemäß einem der vorstehenden Ansprüche, ferner umfassend eine dritte Expansionsturbine (7), wobei:
der Arbeitseinlassdruck der dritten Expansionsturbine von jenem wenigstens einer von der ersten und der zweiten Expansionsturbine verschieden ist.

4. Kryogene Verflüssigungsvorrichtung gemäß Anspruch 3, wobei die erste Anordnung von Leitungen so ist, dass die dritte Expansionsturbine entweder parallel oder in Reihe mit wenigstens einer von der ersten und der zweiten Turbine vorliegt, so dass wenigstens ein Teil des zweiten Teils des druckbeaufschlagten Prozessgasstroms durch die dritte Turbine geleitet wird.

5. Kryogene Verflüssigungsvorrichtung gemäß einem der vorstehenden Ansprüche, ferner umfassend einen Kältemittelkreis, der über die erste Anordnung von Leitungen mit dem Abstrom der zweiten Expansionsturbine verbunden ist.

6. Kryogene Verflüssigungsvorrichtung gemäß einem der vorstehenden Ansprüche, ferner umfassend eine dritte Anordnung von Leitungen, die ein zweites Wärmeträgerfluid durch einen geschlossenen Kühlkreis (101) und durch einen lokalisierten Bereich des Wärmetauschers leitet.

7. Kryogene Verflüssigungsvorrichtung gemäß einem der vorstehenden Ansprüche, ferner umfassend einen zweiten Phasentrenner (18) und eine zweite Expansionsvorrichtung (2), wobei die Anordnung von Leitungen so angeordnet ist, dass wenigstens ein Teil des zweiten Teils des druckbeaufschlagten Gasstroms durch die zweite Expansionsvorrichtung und den zweiten Phasentrenner geleitet wird, nachdem er durch die erste Expansionsturbine getreten ist.

8. Kryogene Verflüssigungsvorrichtung gemäß einem der vorstehenden Ansprüche, ferner umfassend einen ersten Kompressor (20), wobei die erste Anordnung von Leitungen so angeordnet ist, dass wenigstens ein Teil des zweiten Teils des druckbeaufschlagten Gasstroms durch den ersten Kompressor geleitet wird, bevor er durch die erste Expansionsturbine tritt.

9. Kryogene Verflüssigungsvorrichtung gemäß einem der vorstehenden Ansprüche, ferner umfassend einen zweiten Kompressor (19), wobei die erste Anordnung von Leitungen so angeordnet ist, dass der erste Teil des druckbeaufschlagten Gasstroms durch den zweiten Kompressor geleitet wird, bevor er durch den Wärmetauscher tritt.

10. Kryogene Verflüssigungsvorrichtung gemäß Anspruch 9, ferner umfassend einen Kühler (10), wobei die erste Anordnung von Leitungen so angeordnet ist, dass der erste Teil des druckbeaufschlagten Gasstroms durch den Kühler geleitet wird, nachdem er durch den zweiten Kompressor getreten ist und bevor er durch den Wärmetauscher tritt.

11. Kryogene Verflüssigungsvorrichtung gemäß einem der vorstehenden Ansprüche, wobei der Abstrom aus der zweiten oder, wenn abhängig von Anspruch 4 oder Anspruch 5, dritten, und fünften Expansionsturbine in den ersten Phasentrenner geleitet wird.

12. Kryogene Verflüssigungsvorrichtung gemäß Anspruch 1, wobei die erste Anordnung von Leitungen so angeordnet ist, dass der druckbeaufschlagte Gasstrom, der aus dem Zustromkompressor abströmt, in eine Wärmespeichervorrichtung (404) geleitet wird, bevor er durch den Wärmetauscher tritt, und vorzugsweise so, dass der druckbeaufschlagte Gasstrom, der aus der Wärmespeichervorrichtung abströmt, zu einer Wärmeabfuhrvorrichtung (406) geleitet wird, bevor er durch den Wärmetauscher tritt.

13. Verfahren zum Abgleichen eines Verflüssigungsverfahrens unter Verwendung von Kälterückführung von einer externen Wärmeenergiequelle, wobei das Verfahren umfasst:
Leiten eines Zustroms zu dem Eingang eines Zustromkompressors;
Ausgeben eines druckbeaufschlagten Gasstroms aus dem Zustromkompressor;
Leiten eines ersten Teils des druckbeaufschlagten Gasstroms durch einen Wärmetauscher, eine erste Expansionsvorichtung und einen ersten Phasentrenner;
Leiten des gasförmigen Abstroms aus dem ersten Phasentrenner zum Zusammenführen mit dem Zustrom nach dem Durchlaufen des Wärmetauschers; und
Leiten eines Kälterückgewinnungsstroms von Wärmeträgerfluid durch einen Kälterückgewinnungskreis, wobei:
das Wärmeträgerfluid durch eine Wärmespeichervorrichtung und an einem Eintrittspunkt durch den Wärmetauscher geleitet wird;
Leiten eines zweiten Teils eines druckbeaufschlagten Gasstroms durch eine erste Expansionsturbine, dann in einer Gegenstromrichtung zu dem ersten Teil des druckbeaufschlagten Gasstroms durch den Wärmetauscher und dann durch eine zweite Expansionsturbine;
wobei:
die Arbeitseinlassdrucke der ersten und der zweiten Expansionsturbine voneinander verschieden sind,
**dadurch gekennzeichnet, dass** das Verfahren ferner umfasst:
Leiten eines dritten Teils des druckbeaufschlagten Gasstroms durch eine vierte Expansionsturbine und dann in einer Gegenstromrichtung zu dem ersten Teil des druckbeaufschlagten Gasstroms durch den Wärmetauscher und dann durch eine fünfte Expansionsturbine.

## Revendications

1. Dispositif de liquéfaction cryogénique comprenant :
un échangeur de chaleur (100) ;
un premier séparateur de phases (2) ;
un premier dispositif de détente (1) ;
une première turbine de détente (5) ;
une deuxième turbine de détente (6) ;
un premier agencement de conduits, dans lequel :
les pressions de fonctionnement d'entrée des première et deuxième turbines de détente sont différentes l'une de l'autre ; et
le premier agencement de conduits est agencé de telle sorte que :
une première partie d'un courant de gaz sous pression est acheminée à travers l'échangeur de chaleur, le premier dispositif de détente et le premier séparateur de phases ;
une deuxième partie du courant de gaz sous pression est acheminée à travers la première turbine de détente, puis à travers l'échangeur de chaleur dans une direction à contre-courant de la première partie du courant de gaz sous pression, puis à travers la deuxième turbine de détente ;
un circuit de récupération de froid (30) comportant un courant de récupération de froid d'un premier fluide de transfert de chaleur qui est acheminé à travers l'échangeur de chaleur et entre dans l'échangeur de chaleur à un point d'entrée, le circuit de récupération de froid comprenant :
un dispositif de stockage d'énergie thermique ;
un moyen pour faire circuler le premier fluide de transfert de chaleur ; et
un deuxième agencement de conduits agencé pour acheminer le premier fluide de transfert de chaleur à travers le dispositif de stockage d'énergie thermique et l'échangeur de chaleur ;
un compresseur de courant d'alimentation adapté pour délivrer le courant de gaz sous pression,
dans lequel le premier agencement de conduits est agencé de telle sorte que :
a) un courant d'alimentation est acheminé jusqu'à l'entrée du compresseur de courant d'alimentation ; et
b) le courant de sortie gazeux du premier séparateur de phases rejoint le courant d'alimentation après avoir traversé l'échangeur de chaleur,
**caractérisé en ce que** le dispositif de liquéfaction cryogénique comprend en outre une quatrième turbine de détente (14) et une cinquième turbine de détente (16),
et **en ce que** le premier agencement de conduits est également agencé de telle sorte qu'une troisième partie du courant de gaz sous pression est acheminée à travers la quatrième turbine de détente, puis à travers l'échangeur de chaleur dans une direction à contre-courant de la première partie du courant de gaz sous pression, puis à travers la cinquième turbine de détente.

2. Dispositif de liquéfaction cryogénique d'une quelconque revendication précédente, dans lequel la première partie du courant de gaz sous pression et la deuxième partie du courant de gaz sous pression sont soit à des pressions différentes, soit à la même pression en amont du premier dispositif de détente et de la première turbine de détente, respectivement.

3. Dispositif de liquéfaction cryogénique d'une quelconque revendication précédente, et comprenant en outre une troisième turbine de détente (7), dans lequel :
la pression de fonctionnement d'entrée de la troisième turbine de détente est différente de celle d'au moins une des première et deuxième turbines de détente.

4. Dispositif de liquéfaction cryogénique de la revendication 3, dans lequel le premier agencement de conduits est tel que la troisième turbine de détente est soit en parallèle, soit en série avec au moins une des première et deuxième turbines de telle sorte qu'au moins une partie de la deuxième partie du courant de gaz de procédé sous pression est acheminée à travers la troisième turbine.

5. Dispositif de liquéfaction cryogénique d'une quelconque revendication précédente, et comprenant en outre un circuit de fluide frigorigène qui est relié à la sortie de la deuxième turbine de détente par le biais du premier agencement de conduits.

6. Dispositif de liquéfaction cryogénique d'une quelconque revendication précédente, et comprenant en outre un troisième agencement de conduits qui achemine un deuxième fluide de transfert de chaleur à travers un circuit de réfrigération en cycle fermé (101) et à travers une zone localisée de l'échangeur de chaleur.

7. Dispositif de liquéfaction cryogénique d'une quelconque revendication précédente, et comprenant en outre un deuxième séparateur de phases (18) et un deuxième dispositif de détente (2), l'agencement de conduits étant agencé de telle sorte qu'au moins une partie de la deuxième partie du courant de gaz sous pression est acheminée à travers le deuxième dispositif de détente et le deuxième séparateur de phases après avoir traversé la première turbine de détente.

8. Dispositif de liquéfaction cryogénique d'une quelconque revendication précédente, et comprenant en outre un premier compresseur (20), le premier agencement de conduits étant agencé de telle sorte qu'au moins une partie de la deuxième partie du courant de gaz sous pression est acheminée à travers le premier compresseur avant de traverser la première turbine de détente.

9. Dispositif de liquéfaction cryogénique d'une quelconque revendication précédente, et comprenant en outre un deuxième compresseur (19), le premier agencement de conduits étant agencé de telle sorte que la première partie du courant de gaz sous pression est acheminée à travers le deuxième compresseur avant de traverser l'échangeur de chaleur.

10. Dispositif de liquéfaction cryogénique de la revendication 9, et comprenant en outre un refroidisseur (10), le premier agencement de conduits étant agencé de telle sorte que la première partie du courant de gaz sous pression est acheminée à travers le refroidisseur après avoir traversé le deuxième compresseur et avant de traverser l'échangeur de chaleur.

11. Dispositif de liquéfaction cryogénique d'une quelconque revendication précédente, dans lequel la sortie de la deuxième ou, lorsqu'elle est dépendante de la revendication 4 ou de la revendication 5, de la troisième et de la cinquième turbine de détente est acheminée à l'intérieur du premier séparateur de phases.

12. Dispositif de liquéfaction cryogénique de la revendication 1, dans lequel le premier agencement de conduits est agencé de telle sorte que le courant de gaz sous pression délivré depuis le compresseur de courant d'alimentation est acheminé jusqu'à un dispositif de stockage de chaleur (404) avant de traverser l'échangeur de chaleur, et de préférence de telle sorte que le courant de gaz sous pression délivré depuis le dispositif de stockage de chaleur est acheminé jusqu'à un dispositif de rejet de chaleur (406) avant de traverser l'échangeur de chaleur.

13. Procédé d'équilibrage d'une opération de liquéfaction à l'aide d'un recyclage de froid depuis une source d'énergie thermique externe, le procédé comprenant :
l'acheminement d'un courant d'alimentation jusqu'à l'entrée d'un compresseur de courant d'alimentation ;
la délivrance d'un courant de gaz sous pression depuis le compresseur de courant d'alimentation ;
l'acheminement d'une première partie du courant de gaz sous pression à travers un échangeur de chaleur, un premier dispositif de détente, et un premier séparateur de phases ;
l'acheminement du courant de sortie gazeux du premier séparateur de phases pour qu'il rejoigne le courant d'alimentation après qu'il a traversé l'échangeur de chaleur ; et
l'acheminement d'un courant de récupération de froid de fluide de transfert de chaleur à travers un circuit de récupération de froid, dans lequel :
le fluide de transfert de chaleur est acheminé à travers un dispositif de stockage d'énergie thermique et à travers l'échangeur de chaleur à un point d'entrée ;
l'acheminement d'une deuxième partie d'un courant de gaz sous pression à travers une première turbine de détente, puis à travers l'échangeur de chaleur dans une direction à contre-courant de la première partie du courant de gaz sous pression, puis à travers une deuxième turbine de détente ;
dans lequel :
les pressions de fonctionnement d'entrée des première et deuxième turbines de détente sont différentes l'une de l'autre,
**caractérisé en ce que** le procédé comprend en outre :
l'acheminement d'une troisième partie du courant de gaz sous pression à travers une quatrième turbine de détente, puis à travers l'échangeur de chaleur dans une direction à contre-courant de la première partie du courant de gaz sous pression, puis à travers une cinquième turbine de détente.
